# EUROPÄISCHE PATENTSCHRIFT

(11) **EP 1 607 926 B1**
(45) Veröffentlichungstag und Bekanntmachung des Hinweises auf die Patenterteilung: **27.09.2006**
(21) Anmeldenummer: 04013943.8
(22) Anmeldetag: 15.06.2004
(51) Int. Cl.: G09F 3/12, A01G 23/099

(54) **Signierplättchen zum Kennzeichnen von Baumstämmen und Einschlaghammer zum Anbringen desselben an Baumstämmen**
Sign plate for labelling tree trunks and hammering device for the attachment of the same to tree trunks
Plaquette de marquage pour marquer des troncs d'arbres et dispositif de martelage pour la mise en place d'une telle plaquette sur les troncs d'arbres

(43) Veröffentlichungstag der Anmeldung: 21.12.2005
(73) Patentinhaber: Latschbacher GmbH, 4484 Kronstorf (AT)
(72) Erfinder: Latschbacher, Klaus, Dipl.-Ing., 4484 Kronstorf (AT); Huber, Johann, 4484 Kronstorf (AT)
(74) Vertreter: Vetter, Hans

(56) Entgegenhaltungen:
- EP-A- 1 286 325
- DE-A- 3 640 039
- DE-U- 9 000 653
- US-A- 5 943 804

## Beschreibung

Die Erfindung betrifft ein Signierplättchen zum Kennzeichnen von Baumstämmen, mit einem eine Signatur aufweisenden Flachkörper, der mit Haltemitteln zum Aufstecken auf einen Einschlaghammer versehen ist, sowie einen solchen Einschlaghammer zum Anbringen solcher Signierplättchen an Baumstämmen.

Derartige Signierplättchen sind beispielsweise aus der GB 2075464 A, der EP-A-1246152 oder der EP-A-1286325 bekannt, wobei insbesondere in der letztgenannten Druckschrift auch ein Einschlaghammer zum Befestigen der Signierplättchen an Holz dargestellt und beschrieben ist. Die Signierplättchen tragen hier eine optische, magnetische oder elektronische Signatur bzw. Codierung, um das jeweilige Holz bzw. den jeweiligen Baumstamm zu kennzeichnen. Die bekannten Signierplättchen besitzen einstückig angeformte Einschlagelemente, die beim Einschlagen in das Holz eindringen und das Plättchen auf diese Weise verankern. Das Plättchen kann anschließend, insbesondere nach einer gewissen Wachstumszeit des Baumes, nur noch sehr mühsam mechanisch entfernt werden und löst sich üblicherweise erst bei der späteren Holzverarbeitung bei der entsprechenden chemischen Behandlung ab.

Eine Aufgabe der vorliegenden Erfindung besteht nun darin, ein Signierplättchen, das sich automatisch nach einer bestimmten Anzahl von Jahren vom lebenden Baumstamm ablöst, sowie einen Einschlaghammer zum Befestigen eines solchen Signierplättchens an einem lebenden Baumstamm zu schaffen.

Diese Aufgabe wird erfindungsgemäß durch ein Signierplättchen mit den Merkmalen des Anspruchs 1 bzw. durch einen Einschlaghammer mit den Merkmalen des Anspruchs 6 gelöst.

Die Vorteile der erfindungsgemäßen Lösung bestehen insbesondere darin, dass durch Verankerung des Nagels im Baumstamm das Signierplättchen beim Wachsen des Baumes durch den sich vergrößernden Stammdurchmesser automatisch entlang des Nagels nach außen geschoben wird, sodass es schließlich abfällt. Da die Zunahme des Stammdurchmessers im Allgemeinen ungefähr abgeschätzt werden kann, kann durch die Einschlagtiefe des Nagels festgelegt werden, wann das Signierplättchen abfällt. Diese Einschlagtiefe kann beispielsweise durch Einstellungen am Einschlaghammer festgelegt werden. Durch den Einschlaghammer ist es möglich, dass nach der Entnahme des Plättchens aus einem Magazin mittels des Hammers dieses zusammen mit dem Nagel auf einfache Weise am Baumstamm fixiert werden kann. Die Haltekraft der Haltemittel am Einschlaghammer ist geringer ausgelegt als die Verschiebekraft des Nagels durch die Durchgangsöffnung, damit der Anschlaghammer nach dem Einschlagen wieder vom Signierplättchen abgenommen werden kann, ohne dass sich dieses entlang des Nagels verschiebt.

Um den Flachkörper elastisch am Nagel zu halten, erstrecken sich vom Rand der Durchgangsöffnung aus Schlitze nach außen, sodass elastische Zungen gebildet werden, die sich mit dem Nagel verklemmen.

Durch die in den Unteransprüchen aufgeführten Maßnahmen sind vorteilhafte Weiterbildungen und Verbesserungen des im Anspruch 1 angegebenen Signierplättchens bzw. des im Anspruch 6 angegebenen Einschlaghammers möglich.

In vorteilhafter Weise ist der Nagel wenigstens entlang einer Teillänge zwischen einer Ursprungsposition des Flachkörpers und dem von einer vorderen Einschlagspitze entfernten hinteren Endbereich mit einer Riffelung oder mit Umfangsrillen oder mit gewindeartigen Rillen versehen, um einen besseren Halt des Nagels am Flachkörper zu ermöglichen bzw. um eine einer Verschiebung entgegenwirkende größere Kraft zu erzeugen.

Der hintere Endbereich des Nagels ist konusartig im Durchmesser erweitert, um zum einen eine Verformung beim Einschlagen zu verhindern, und zum anderen, um die Haltekraft am Flachkörper entlang des hinteren Bereichs zu erhöhen.

Der Flachkörper besitzt zweckmäßigerweise einstückig angeformte Abstandselemente an seiner von den Haltemitteln abgewandten Flachseite, um eine Beschädigung der schwächer ausgelegten Haltemittel beim Stapeln in einem Magazin und insbesondere beim Herausnehmen eines Signierplättchens durch den Einschlaghammer zu verhindern.

Die Haltemittel sind zweckmäßigerweise als drei oder vier hakenartig in eine Ringnut des Einschlaghammers einrastende Halteglieder ausgebildet.

Die Länge des Einlegeschlitzes im Einschlaghammer entspricht in vorteilhafter Weise der freien Länge des Nagels nach dem Einschlagen und ist in einer zweckmäßigen Ausgestaltung der Erfindung einstellbar.

Die Schlagfläche des Einschlaghammers ist bevorzugt an der Vorderseite einer Schlagscheibe angeordnet, die mit der zum Einrasten der Haltemittel dienenden Umfangsnut versehen ist.

Ein Ausführungsbeispiel der Erfindung ist in der Zeichnung dargestellt und in der nachfolgenden Beschreibung näher erläutert. Es zeigen:
- Fig. 1: eine perspektivische Darstellung eines mit einem Nagel versehenen Signierplättchens,
- Fig. 2: eine vergrößerte Detaildarstellung der Durchgangsöffnung im Flachkörper des Signierplättchens für den Nagel,
- Fig. 3: einen Einschlaghammer mit aufgesetztem Signierplättchen in der Seitenansicht und
- Fig. 4: eine Detaildarstellung des Schlagbereichs des Einschlaghammers in einer Ansicht von oben.

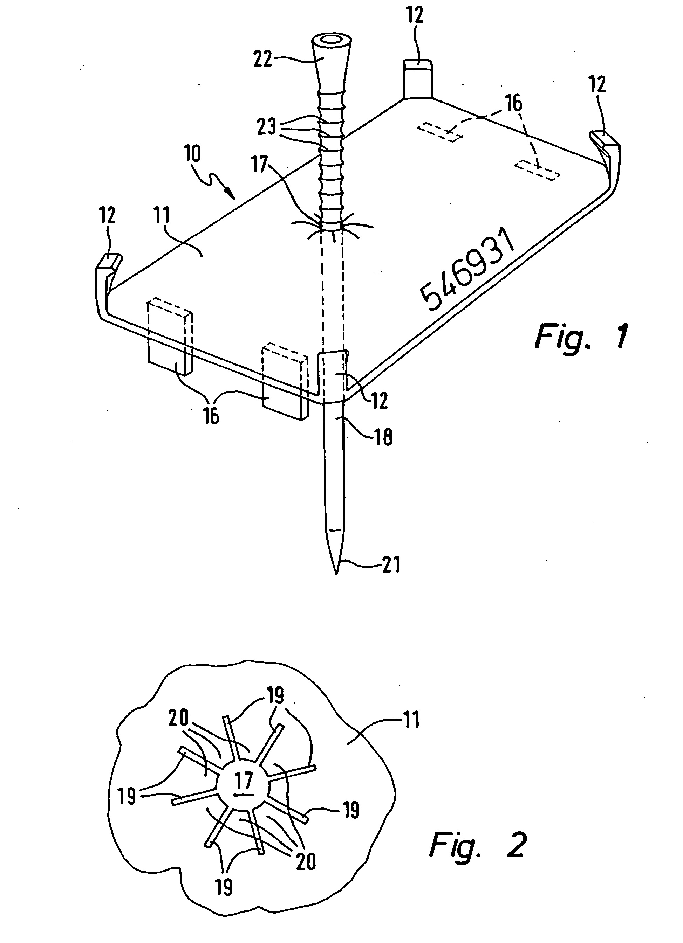

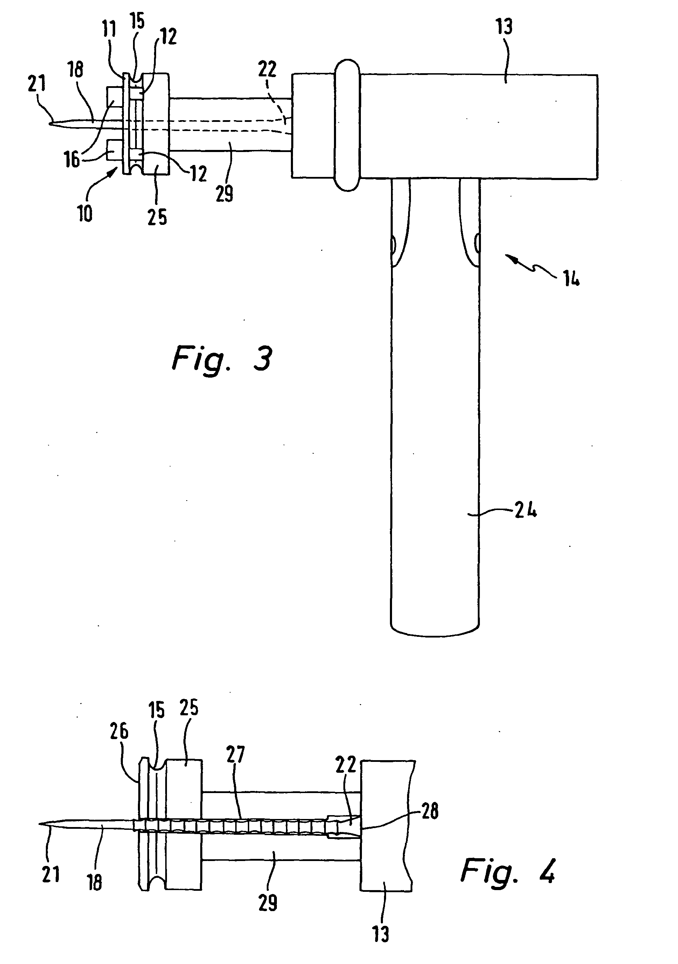

Das in Fig. 1 dargestellte Signierplättchen 10 ist als einstückiges Kunststoff-Spritzgussteil hergestellt und besteht im Wesentlichen aus einem rechteckförmigen plättchenartigen Flachkörper 11, der an seinen vier Eckbereichen mit nach einer Seite hin hochstehenden Befestigungshaken 12 versehen ist, die üblicherweise als Abnahmehaken bezeichnet werden. Diese Befestigungshaken 12 weisen an ihren freien Endbereichen gegeneinander, also zur Plättchenmitte hin, weisende Rastvorsprünge auf, die beim Aufstecken auf einen Hammerkopf 13 eines Einschlaghammers 14 (siehe Fig. 3 und 4) in eine Umfangsringnut 15 des Hammerkopfs 13 eingreifen und dadurch verrasten.

An der gegenüberliegenden Seite des Flachkörpers 11 sind vier einstückig angeformte Abstandselemente 16 vorgesehen, die vom Flachkörper 11 abstehen und geringfügig länger als die Befestigungshaken 12 sind. Dadurch schützen sie die Befestigungshaken 12 beim Stapeln in einem nicht dargestellten Plättchenmagazin. In einer einfacheren Ausführung können diese Abstandselemente 16 auch entfallen.

Der Flachkörper 11 kann anstelle der rechteckförmigen Gestalt auch prinzipiell eine andere Gestalt aufweisen. In der eingangs aufgeführten GB 2075464 A sind solche abweichenden Flachkörperformen dargestellt.

Der Flachkörper 11 besitzt ein in Fig. 2 näher dargestelltes Durchgangsloch 17 zur Aufnahme eines Nagels 18. Vom Rand des Durchgangslochs 17 aus erstrecken sich Schlitze 19 strahlenförmig nach außen, sodass elastische Zungen 20 gebildet werden, die elastisch am Nagel 18 anliegen.

Der Nagel 18 besitzt eine Einschlagspitze 21 an einem Ende und einen konusartigen Nagelkopf 22 am gegenüberliegenden Ende. Der Nagelkopf 22 wird dadurch gebildet, dass sich der Nagel dem Ende zu im Durchmesser konusartig vergrößert. Die Umfangsfläche des Nagels 18 ist mit Umfangsrillen 23 versehen, die auch als Riffelung oder als gewindeartige Rillen ausgebildet sein können. Sie dienen zum besseren Halt des Nagels 18 am Flachkörper 11, sodass sich dieser Flachkörper 11 nur durch eine relativ große Kraft am Nagel 18 verschieben lässt. Der Nagel 18 wird mittels des Einschlaghammers 14 in noch zu beschreibender Weise in einen lebenden Baumstamm eingeschlagen, bis das Signierplättchen 10 mittels der Abstandselemente 16 am Baumstamm anliegt. Der Nagel 18 ist dabei fest im Baumstamm verankert. Wenn sich der Baumstamm nun infolge des Wachstums im Durchmesser vergrößert, verschiebt er mit seiner Außenfläche das Signierplättchen 10 entlang des Nagels 18, bis es nach einigen Jahren ganz abgestreift wird und abfällt. Je tiefer der Nagel eingeschlagen wird und je geringer dadurch der überstehende Bereich des Nagels wird, desto kürzer ist die Zeit, während der das Plättchen am Baumstamm gehalten wird. Durch Variation der Einschlagtiefe bzw. dieses überstehenden Bereichs kann daher die Zeit eingestellt werden, während der das Plättchen am Baumstamm gehalten wird. Die Umfangsrillen 23 brauchen nur entlang des Verschiebewegs des Flachkörpers 11 entlang des Nagels 18 vorgesehen sein.

Beim in Fig. 1 dargestellten Ausführungsbeispiel ist der Flachkörper 11 mit einer sechsstelligen Zahl als Signatur bzw. Codierung versehen. Anstelle dieser Signatur bzw. Codierung kann auch eine Strichcodierung oder sonstige optische Codierung oder eine magnetische oder elektronische Codierung beispielsweise gemäß der eingangs genannten EP-A-1246152 treten.

Der in den Fig. 3 und 4 dargestellte Einschlaghammer 14 besitzt einen Hammerstiel 24, an dem der Hammerkopf 13 befestigt ist. Der Hammerkopf 13 besitzt an einem Ende eine mit der Umfangsringnut 15 versehene Schlagscheibe 25, deren freie Stirnfläche 26 im aufgesteckten Zustand des Signierplättchens 10 an dessen Flachkörper 11 anliegt und als Schlagfläche dient. Von dieser freien Stirnfläche 26 aus erstreckt sich senkrecht dazu ein Einlegeschlitz 27 zur Aufnahme des hinteren Bereichs des Nagels 18 bis zu einer Anlagefläche 28 für den Nagelkopf 22. Zum Einsetzen des Nagelkopfs 22 ist der Einlegeschlitz 27 im Bereich vor der Anlagefläche 28 verbreitert.

Der Einlegeschlitz 27 greift von oben her in den Hammerkopf 13 ein. Daher ist dieser Einlegeschlitz 27 in der Ansicht von oben gemäß Fig. 4 erkennbar.

In der Anwendung wird zunächst ein Nagel 18 in den Einlegeschlitz 27 gemäß Fig. 4 eingelegt. Dann greift der mit dem Nagel 18 versehene Hammerkopf 13 in ein Plättchenmagazin derart ein, dass der Nagel 18 in das Durchgangsloch 17 eines Signierplättchens 10 eintaucht. Erreicht die Schlagscheibe 25 das oberste Signierplättchen 10, so verrastet dieses mittels der Befestigungshaken 12 mit der Umfangsringnut 15. Nun kann der mit dem Signierplättchen 10 versehene Nagel 18 in einen Baumstamm eingeschlagen werden, gewöhnlich so weit, bis das Signierplättchen 10 am Baumstamm anliegt. Der Hammerkopf wird dann wieder vom Nagel und vom Signierplättchen 10 gelöst. Der Hammerkopf 13 kann mit dem Plättchenmagazin zusammenwirkende Mittel besitzen, um sicherzustellen, dass die Signierplättchen 10 winkelgerecht am Hammerkopf 13 verrastet werden. Beispielsweise kann die Schlagscheibe 25 einen Vorsprung besitzen, der mit einem Schlitz im Plättchenmagazin zusammenwirkt.

Beim Ausführungsbeispiel ist das Durchgangsloch 17 außermittig im Flachkörper 11 angeordnet. Prinzipiell ist auch eine mittige oder sonstige Anordnung des Durchgangslochs 17 möglich.

Beim dargestellten Ausführungsbeispiel besitzt der Einlegeschlitz 27 eine feste Länge, sodass die Einschlagtiefe nur dadurch variiert werden kann, dass unterschiedlich lange Nägel verwendet werden. Dennoch bleibt die Länge des nach dem Einschlagen überstehenden Bereichs des Nagels 18 konstant. In einer variableren Ausführung kann beispielsweise ein mit der Schlagscheibe 25 versehenes zylindrisches Teil 29, das mit dem Einlegeschlitz 27 versehen ist, verschiebbar und in verschiedenen Positionen fixierbar im übrigen Bereich des Hammerkopfes 13 angeordnet sein. Weiterhin ist es möglich, die Anlagefläche 28 für den Nagelkopf 22 durch eine Einstellschraube oder dergleichen verstellbar zu machen.

## Patentansprüche

1. Signierplättchen zum Kennzeichnen von Baumstämmen, mit einem eine Signatur aufweisenden Flachkörper (11), der mit Haltemitteln (12) zum Aufstecken auf einen Einschlaghammer (14) versehen ist, **dadurch gekennzeichnet, dass** sich ein Nagel (18) senkrecht durch den Flachkörper (11) erstreckt, wobei der Nagel (18) in einer Durchgangsöffnung (17) des Flachkörpers (11) klemmend und nur unter Kraftaufwand verschiebbar gehalten wird und die Haltekraft der Haltemittel (12) geringer als die Verschiebekraft des Nagels (18) durch die Durchgangsöffnung (17) ausgelegt ist, und dass sich vom Rand der Durchgangsöffnung (17) aus Schlitze (19) nach außen erstrecken, sodass elastische Zungen (20) gebildet werden.

2. Signierplättchen nach Anspruch 1, **dadurch gekennzeichnet, dass** der Nagel (18) wenigstens entlang einer Teillänge zwischen einer Ursprungsposition des Flachkörpers (11) und dem von einer vorderen Einschlagspitze (21) entfernten hinteren Endbereich (22) mit einer Riffelung oder mit Umfangsrillen (23) oder mit gewindeartigen Rillen versehen ist.

3. Signierplättchen nach einem der vorhergehenden Ansprüche, **dadurch gekennzeichnet, dass** der hintere Endbereich (22) des Nagels (18) konusartig im Durchmesser erweitert ist.

4. Signierplättchen nach einem der vorhergehenden Ansprüche, **dadurch gekennzeichnet, dass** der Flachkörper (11) einstückig angeformte Abstandselemente (16) an seiner von den Haltemitteln (12) abgewandten Flachseite besitzt.

5. Signierplättchen nach einem der vorhergehenden Ansprüche, **dadurch gekennzeichnet, dass** die Haltemittel (12) als drei oder vier hakenartig in eine Ringnut (15) des Einschlaghammers (14) einrastende Halteglieder ausgebildet sind, wobei vorzugsweise vier Halteglieder an den vier Ecken des im Wesentlichen rechteckigen Flachkörpers (11) angeordnet sind.

6. Einschlaghammer zum Einschlagen des Signierplättchens (10) in einen Baumstamm, mit einem an einem Hammerkopf (13) angeordneten Hammerstiel (24), **dadurch gekennzeichnet, dass** der Hammerkopf (13) eine zur Anlage des Flachkörpers (11) des Signierplättchens (10) ausgebildete Schlagfläche (26) besitzt, hinter der sich eine zum Einrasten der Haltemittel (12) des Signierplättchens (10) dienende Umfangsnut (15) erstreckt, und dass sich ein senkrecht zur Schlagfläche (26) ausgerichteter Einlegeschlitz (27) für den Nagel (18) des Signierplättchens (10) von der Schlagfläche (26) aus bis zu einer Anlagefläche (28) für die hintere Endfläche des Nagels (18) erstreckt.

7. Einschlaghammer nach Anspruch 6, **dadurch gekennzeichnet, dass** die Länge des Einlegeschlitzes (27) der freien Länge des Nagels (18) nach dem Einschlagen entspricht.

8. Einschlaghammer nach Anspruch 6 oder 7, **dadurch gekennzeichnet, dass** die Schlagfläche (26) an der Vorderseite einer Schlagscheibe (25) angeordnet ist, die mit der zum Einrasten der Haltemittel (12) dienenden Umfangsnut (15) versehen ist.

## Claims

1. Marking plate for the identification of tree trunks, with a flat body (11) featuring the signature and provided with retaining means (12) suitable for fitting to a driving-in hammer (14), **characterised in that** a nail (18) extends at right angles through the flat body (11), the nail (18) being held in a jammed manner in a through-hole (17) of the flat body (11) and movable only by using force, and the retaining force of the retaining means (12) being less than the force required to move the nail (18) through the through-hole (17), and **in that** slots (19) extend outwards from the edge of the through-hole (17), resulting in resilient tongues (20).

2. Marking plate according to claim 1, **characterised in that** the nail (18) is provided, at least along part of its length between a starting position of the flat body (11) and the end section (22) remote from a front driving-in point (21), with a corrugation, with circumferential grooves (23) or with thread-like grooves.

3. Marking plate according to any of the preceding claims, **characterised in that** the rear end section (22) of the nail (18) has a conically expanding diameter.

4. Marking plate according to any of the preceding claims, **characterised in that** the flat body (11) is provided with integral spacing elements (16) on the flat side remote from the retaining means (12).

5. Marking plate according to any of the preceding claims, **characterised in that** the retaining means (12) are represented by three or four retaining members latching into an annular groove (15) of the driving-in hammer (14) in the manner of hooks, four retaining members being preferably located at the four corners of the essentially rectangular flat body (11).

6. Driving-in hammer for driving the marking plate (10) into a tree trunk, with a hammer shaft (24) fitted to a hammer head (13), **characterised in that** the hammer head (13) has a striking surface (26) designed for locating the flat body (11) of the marking plate (10), behind which there extends a circumferential groove (15) provided for latching the retaining means (12) of the marking plate (10), and **in that** an installation slot (27) for the nail (18) of the marking plate (10) extends at right angles to the striking surface (26) from the striking surface (26) to a locating surface (28) for the rear end face of the nail (18).

7. Driving-in hammer according to claim 6, **characterised in that** the length of the installation slot (27) equals the free length of the nail (18) after is has been driven in.

8. Driving-in hammer according to claim 6 or 7, **characterised in that** the striking surface (26) is located at the front of a striking disc (25) provided with the circumferential groove (15) used for latching the retaining means (12).

## Revendications

1. Plaquette de marquage pour marquer des troncs d'arbre, avec un corps plat (11) présentant un signe et pourvu de moyens de retenue (12) pour être fixé sur un marteau (14), **caractérisé en ce qu'**un clou (18) s'étend perpendiculairement à travers le corps plat (11), le clou (18) étant maintenu avec serrage dans une ouverture de passage (17) du corps plat (11) et de manière à ne pouvoir être déplacé que sous l'application d'une force, et la force de maintien des moyens de retenue (12) étant inférieure à la force de déplacement du clou (18) à travers l'ouverture de passage (17), et **en ce que** depuis le bord de l'ouverture de passage (17) des fentes (19) s'étendent vers l'extérieur, de sorte que sont formées des languettes élastiques (20).

2. Plaquette de marquage selon la revendication 1, **caractérisée en ce que** le clou (18) est pourvu, au moins le long d'une partie de sa longueur, entre une position initiale du corps plat (11) et la zone terminale arrière (22) éloignée d'une pointe d'enfoncement avant (21), d'un cannelage ou de gorges périphériques (23) ou de gorges de type filet.

3. Plaquette de marquage selon l'une des revendications précédentes, **caractérisé en ce que** la zone d'extrémité arrière (22) du clou (18) présente un diamètre élargi à la manière d'un cône.

4. Plaquette de marquage selon l'une des revendications précédentes, **caractérisé en ce que** le corps plat (11) possède des éléments d'écartement (16) formés d'une seule pièce sur sa face plate tournée à l'opposé des moyens de retenue (12).

5. Plaquette de marquage selon l'une des revendications précédentes, **caractérisé en ce que** les moyens de retenue (12) sont réalisés sous la forme de trois ou quatre organes de retenue s'accrochant à la manière d'un crochet dans une rainure annulaire (15) du marteau (14), quatre organes de retenue étant disposés de préférence aux quatre angles du corps plat (11) sensiblement rectangulaire.

6. Marteau pour clouer la plaquette de signalisation (10) dans un tronc d'arbre, comportant un manche de marteau (24) disposé sur une tête de marteau (13), **caractérisé en ce que** la tête de marteau (13) possède une surface de frappe (26) conçue pour l'application du corps plat (11) de la plaquette de marquage (10), derrière laquelle s'étend une rainure périphérique (15) servant à l'accrochage des moyens de retenue (12) de la plaquette de marquage (10), et **en ce qu'**une fente d'introduction (27), orientée perpendiculairement à la surface de frappe (26), pour le clou (18) de la plaquette de marquage (10), s'étend depuis la surface de frappe (26) jusqu'à une surface d'application (28) pour la surface d'extrémité arrière du clou (18).

7. Marteau selon la revendication 6, **caractérisé en ce que** la longueur de la fente d'introduction (27) correspond à la longueur libre du clou (18) après son enfoncement.

8. Marteau selon la revendication 6 ou 7, **caractérisé en ce que** la surface de frappe (26) est disposée sur la face avant d'un disque de frappe (25) qui est pourvu de la rainure périphérique (15) servant à l'encliquetage des moyens de retenue (12).
